# EUROPEAN PATENT APPLICATION

(11) **EP 4 736 666 A1**
(43) Date of publication of application: **06.05.2026**
(21) Application number: 23943672.8
(22) Date of filing: 29.06.2023
(51) Int. Cl.: A23K 50/20, A23K 20/153

(54) **NUTRIENT COMPOSITION FOR ANIMALS**

(71) Applicant: Racehorse Incorporated, Osaka-shi, Osaka 541-0048 (JP)
(72) Inventor: IKOMA, Yuki, Kizugawa-shi, Kyoto 619-0216 (JP); YAMANE, Takuya, Osaka-shi, Osaka 530-0005 (JP)
(74) Representative: Regimbeau
(86) International application number: PCT/JP2023/024238
(87) International publication number: WO 2025/004279

(57) **Abstract**

An object of the present invention is to provide a novel animal nutritional composition. The present invention is directed to a racehorse nutritional composition, an animal nutritional composition for reducing an elevation of blood lactic acid concentrations, and an animal nutritional composition for coat improvement, each of which comprises nicotinamide mononucleotide.

## Description

### TECHNICAL FIELD

The present invention relates to an animal nutritional composition.

### BACKGROUND ART

Nicotinamide mononucleotide is an intermediate metabolite of coenzyme NAD⁺ biosynthesis. NPL 1 reports that an oral administration clinical trial on humans demonstrated the action of nicotinamide mononucleotide to improve obesity, prevent diabetes, and improve muscle insulin sensitivity. Moreover, NPL 2 reports that an oral administration test on mice demonstrated the action of nicotinamide mononucleotide to suppress body weight gain, improve insulin sensitivity, improve lipid metabolism, improve eye function, increase bone density, and enhance immune function. However, there is no known reports on orally giving nicotinamide mononucleotide to racehorses.

### CITATION LIST

### NON PATENT LITERATURE

NPL 1: Mihoko Yoshino, Jun Yoshino, Brandon D Kayser, Gary J Patti, Michael P Franczyk, Kathryn F Mills, Miriam Sindelar, Terri Pietka, Bruce W Patterson, Shin-Ichiro Imai, Samuel Klein, Nicotinamide mononucleotide increases muscle insulin sensitivity in prediabetic women, Science 2021, 372, 1224-1229.
NPL 2: Kathryn F. Mills, Shohei Yoshida, Liana R. Stein, Koji Uchida, Jun Yoshino, Shin-ichiro Imai, Long-Term Administration of Nicotinamide Mononucleotide Mitigates Age-Associated Physiological Decline in Mice Cell Metabolism 2016, 24, 795-806.

### SUMMARY OF INVENTION

### TECHNICAL PROBLEM

An object of the present invention is to provide a novel animal nutritional composition.

### SOLUTION TO PROBLEM

The present invention encompasses the following.
[1] A racehorse nutritional composition comprising nicotinamide mononucleotide.
[2] An animal nutritional composition for reducing an elevation of blood lactic acid concentrations, comprising nicotinamide mononucleotide.
[3] An animal nutritional composition for coat improvement, comprising nicotinamide mononucleotide.
[4] The animal nutritional composition according to [2] or [3], to be used for racehorses.

### ADVANTAGEOUS EFFECTS OF INVENTION

The animal nutritional composition according to the present invention makes it possible to reduce an elevation of blood lactic acid concentrations in racehorses and/or improve the coat of racehorses.

### BRIEF DESCRIPTION OF DRAWINGS

Fig. 1 shows results of measurement of lactic acid value concentrations in Test Example 1.
Fig. 2 shows average values of lactic acid value concentrations in Test Example 1.

### DESCRIPTION OF EMBODIMENTS

### [Nutritional Composition]

A nutritional composition according to the present invention (hereinafter also called "the present nutritional composition") contains nicotinamide mononucleotide (hereinafter also called "NMN").

### <NMN>

NMN (with a chemical formula of C₁₁H₁₅N₂O₈P) has two optical isomers, α and β, and in the present invention, β-NMN (CAS Number: 1094-61-7) is used. The structure of β-NMN is as follows.

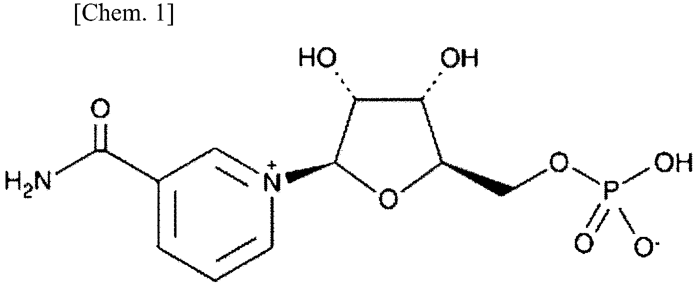

The method for preparing β-NMN is not particularly limited. For example, β-NMN synthesized artificially by a chemical synthesis method, an enzymatic method, a fermentation method, and/or the like can be used after purification. Because β-NMN is a component that is found in a wide variety of living things, it is also possible to use β-NMN that is extracted and/or purified from natural sources such as animals, plants, and microorganisms. It is also possible to use commercially-available purified β-NMN.

As an example of the chemical synthesis method for synthesizing β-NMN, nicotinamide can be reacted with L-ribose tetraacetate and the resulting nicotinamide mononucleoside can be phosphorylated to produce β-NMN. As an example of the enzymatic method, nicotinamide phosphoribosyltransferase (NAMPT) can be used to produce β-NMN from nicotinamide and 5'-phosphoribosyl-1'-pyrophosphoric acid (PRPP). As an example of the fermentation method, the metabolic pathway of NAMPT-expressing microorganisms can be used to produce β-NMN from nicotinamide.

The NMN contained in the present nutritional composition may be a pharmacologically acceptable salt of β-NMN. The pharmacologically acceptable salt of β-NMN may be an inorganic acid salt, or may be an organic acid salt having a basic moiety such as an amine. An acid that forms the above-mentioned acid salt may be, for example, acetic acid, benzenesulfonic acid, benzoic acid, camphorsulfonic acid, citric acid, ethenesulfonic acid, fumaric acid, gluconic acid, glutamic acid, hydrobromic acid, hydrochloric acid, isethionic acid, lactic acid, maleic acid, malic acid, mandelic acid, methanesulfonic acid, mucic acid, nitric acid, pamoic acid, pantothenic acid, phosphoric acid, succinic acid, sulfuric acid, tartaric acid, p-toluenesulfonic acid, and/or the like. The pharmacologically acceptable salt of β-NMN may be an alkali salt, and/or may be an organic salt having an acidic moiety such as a carboxylic acid. A base that forms the above-mentioned acid salt may be, for example, an alkali metal salt or an alkaline-earth metal salt, and may be any of those derived from bases such as sodium hydride, potassium hydroxide, calcium hydroxide, aluminum hydroxide, lithium hydroxide, magnesium hydroxide, zinc hydroxide, ammonia, trimethylammonia, triethylammonia, ethylenediamine, lysine, arginine, ornithine, choline, N,N'-dibenzylethylenediamine, chloroprocaine, procaine, diethanolamine, N-benzylphenethylamine, diethylamine, piperazine, tris(hydroxymethyl)-aminomethane, tetramethylammonium hydroxide, and the like.

The NMN contained in the nutritional composition may be a solvate of free β-NMN or that of a pharmacologically acceptable salt of β-NMN. The solvent that forms the solvate may be water, ethanol, and/or the like.

The content of NMN in the present nutritional composition is not limited, and relative to the total amount of the present nutritional composition regarded as 100 parts by mass, it may be 100 parts by mass, or may be from 1 to 99.9 parts by mass, or may be from 1 to 50 parts by mass, for example.

### <Other Components>

The present nutritional composition may also contain a component other than NMN. For example, the present nutritional composition may contain various vitamins (such as vitamin A, vitamin B1, vitamin B2, vitamin B6, vitamin C, and vitamin E), various minerals, dietary fibers, polyunsaturated fatty acids, other nutrients (carotinoids such as β-carotin, lycopene, and astaxanthin, carnitine, sesamin), stabilizers such as dispersants and emulsifiers, sweeteners, taste-imparting components (such as citric acid and malic acid), flavors, royal jelly, propolis, Agaricus, and/or the like. It may also contain herbs such as peppermint, bergamot, chamomile, and lavender.

### <Form>

The animal nutritional composition according to the present invention may be in the form of powder, powdery agent, granule, soft capsule, hard capsule, pill, tablet, chewable, rapidly disintegrating tablet, syrup, liquid, suspension, suppository, ointment, cream, gel, patch, inhalant, injectable, and/or the like.

Additives that can be used for formulation include soybean oil, safflower oil, olive oil, germ oil, sunflower oil, animal oils such as beef tallow and sardine oil, polyhydric alcohols such as polyethylene glycol, propylene glycol, glycerol, and sorbitol, surfactants such as sorbitan fatty acid esters, sucrose fatty acid esters, glycerol fatty acid esters, and polyglycerol fatty acid esters, purified water, excipients such as lactose, starch, crystalline cellulose, D-mannitol, lecithin, gum arabic, sorbitol solution, and sugar solution, sweeteners, colorants, pH regulators, flavors, and the like. The liquid preparations may be in the form that can be dissolved or suspended in water or other suitable media at the time of administration. The pills and granules may be coated by a well-known method.

### <Purpose of Use>

The present nutritional composition can be given to animals as it is, or as an animal feed composition mixed in animal basic feed. The present nutritional composition may be given to the animals throughout the entire raising period, or may be given during a particular period in the raising period.

Preferable examples of the animals to give the present nutritional composition to include racehorses. When it is given to racehorses, an elevation of blood lactic acid concentrations can be reduced, and, thereby, muscle fatigue can be reduced and muscle pain tends not to occur, potentially contributing to enhanced racehorse performance. The racehorses include horses of age 2 to 7, for example, and also include young horses that are being raised. The amount to feed varies depending on the number of years for which the horses have been raised, the body weight, the sex, and the like, and it is designed to contain 1 g to 10 g of NMN per time, for example. The daily amount of NMN is from 1 g to 30 g, for example, and it is preferably from 1 g to 20 g, more preferably from 1 g to 15 g.

Examples of other animals except racehorses to give the present nutritional composition to include non-human animals, including avians (such as chickens, quails, turkeys, and ducks; such as domestic fowls), and mammals (animals of the subfamily Bovinae (such as farm cattle (cows (such as dairy cattle and/or beef cattle)), bisons, and buffalos), animals of the family Equidae (such as horses, donkeys, and zebras), sheep, goats, antelopes, and pigs). The farm animals may be domestic fowls, and examples thereof include chickens (such as broilers and layers).

The present nutritional composition can be used for reducing an elevation of blood lactic acid concentrations in the target animals, or for improving the coat. Coat improvement means improvement of the hairs, and means improvement of the shine, quality, growth, tone, and the like of the hairs.

### [Animal Feed Composition]

The animal feed composition according to the present invention (hereinafter also called "the present animal feed composition") includes NMN and basic feed. As the present animal feed composition, the above-mentioned configuration that includes the present nutritional composition and basic feed can be mentioned. Details of the components of the present nutritional composition are as described above.

As the basic feed, widely and commercially available basic feeds can be used, such as, for example, oil cakes, animal-derived feed raw materials, grains and processed products thereof, animal oils/fats, vegetable oils/fats, and mixtures of these. The oil cakes are dried ones such as corn, milo, and kaoliang, soybean oil cake, rapeseed oil cake, sesame seed oil cake, cottonseed oil cake, and the like. The animal-derived feed raw materials are fish meal, meat-and-bone meal, and the like. The grains are starch, soy, wheat, oat, and the like. The animal oils/fats are meat meal, chicken meal, lard, beef tallow, and the like. The vegetable oils/fats are rape oil, palm oil, coconut oil, soybean oil, safflower oil, corn oil, cottonseed oil, and the like. CP of basic feed means crude protein (one of six components of feed; the nitrogen content multiplied by 6.25), and basic feeds with a CP of 18% (which means the content of crude protein is 18%), a CP of 19%, and the like can be adopted.

To the basic feed, other additives than the present nutritional composition may be added. Herein, examples of the additives include seaweeds. Seaweeds contain many kinds of nutrients, including minerals such as calcium, zinc, and iodine (iodo), dietary fibers such as sodium alginate, potassium alginate, and calcium alginate, polysaccharides such as fucoidan and funoran, and aminopeptides such as nori (laver) peptide and wakame peptide. Another example of the additives is collagen, in the form of extract, dried product, crushed product, powder, and the like, for example.

Other examples of the additives include fatty acids such as linoleic acid, linolenic acid, eicosapentaenoic acid, and docosahexaenoic acid, minerals such as common salt, calcium carbonate, calcium phosphate, and silicic anhydride, vitamins such as vitamin A, vitamin B2, vitamin D, vitamin E, vitamin K, biotin, folic acid, and pantothenic acid, amino acids such as lysine, glycine, and methionine, emulsifiers such as sorbitan fatty acid esters, sucrose fatty acid esters, and lecithin, probiotics such as lactic acid bacteria, trace minerals such as iron, zinc, manganese, and copper, mushrooms and components of mushrooms such as hanabiratake mushroom, maitake mushroom, shiitake mushroom, and caterpillar fungus, sake lees, antioxidants, fungicides, dietary fibers, and the like.

The content of NMN in the present animal feed composition is not particularly limited, and, relative to 100 parts by mass of the basic feed, it can be from 0.005 to 20 parts by mass, for example, and it is preferably from 0.01 to 10 parts by mass, more preferably from 0.02 to 5 parts by mass. The amount of the present animal feed composition to feed varies depending on the number of years for which the animals have been raised, the body weight, the sex, and the like; it is from 1 kg to 8 kg per time, for example, and it can be from 18 kg to 24 kg per day, for example.

Details of the animals to give the present animal feed composition to are as described above.

### [Examples]

In the following, a more specific description of the present invention will be given with reference to Examples, but these examples are not intended to limit the scope of the present invention.

### [Preparation of Nutritional Composition]

A nutritional composition A having the composition specified in Table 1, and a basic feed A (containing oat, soybean dregs (manufactured by Nosan Corporation), and a feed (Wizard (trade name) manufactured by Crossfeed Co., Ltd.)) were prepared.

**[Table 1]**

| Component | Added amount (parts by mass) |
|---|---|
| β-NMN | 5.1 |
| Corn starch | 4.9 |
| Maltodextrin | 4.9 |
| Maltitol | 5.1 |
| Fructose | 4.9 |
| Resistant dextrin | 4.9 |
| Trehalose | 4.9 |
| Sweetener (stevia) | 0.1 |
| Flavor | 0.05 |
| Total | **34.85** |

### [Test Example 1]

In Test Example 1, four racehorses (Racehorse A (age 7), Racehorse B (a horse of age 4), Racehorse C (a horse of age 8), and Racehorse D (a horse of age 3)) were fed as specified below, and the blood lactic acid concentrations and the coat were evaluated.

### <Evaluation of Blood Lactic Acid Concentrations>

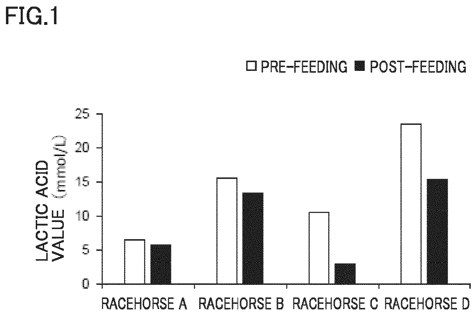

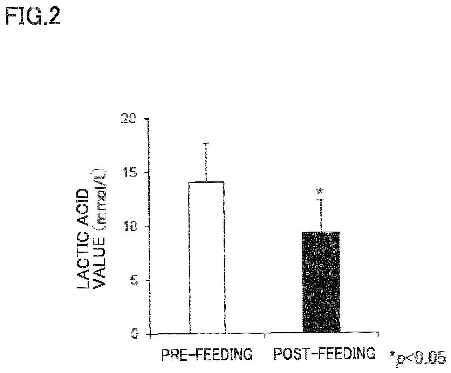

Each racehorse was fed with the basic feed A for consecutive 14 days. Feeding was carried out three times per day, 6 kg to 8 kg per time. On Day 14, after ordinary training for 80 minutes to 100 minutes (60 minutes on a walking machine, 20 to 40 minutes of training), blood was drawn from the neck vein to measure the blood lactic acid concentrations with a lactic acid meter (Lactate Pro 2 LT-1730 (trade name) manufactured by ARKRAY, Inc.) (hereinafter also called "a pre-feeding test"). Subsequently, each racehorse was fed with the basic feed A together with the nutritional composition A, for consecutive 14 days. Feeding was carried out three times per day, 6 kg to 8 kg of the basic feed A per time, 12 g of the nutritional composition A per time, and 5.0 to 5.5 g of NMN per day. Then, after ordinary training for 80 minutes to 100 minutes, the blood lactic acid concentrations were measured in the same manner as described above (hereinafter called "a post-feeding test"). Fig. 1 shows results of measurement of lactic acid value concentrations for the four horses, and Fig. 2 shows average values of lactic acid value concentrations for the four horses.

### <Evaluation of Coat>

For each racehorse, visual examination was performed to compare the coat at the time of the pre-feeding test and at the time of the post-feeding test, and evaluation was performed on the coat at the time of the post-feeding test in accordance with the criteria described below. Table 2 shows the results of the evaluation.
3: Good improvement was observed on the shine and the texture.
2: Slight improvement was observed on the shine and the texture.
1: No improvement was observed on the coat.

**[Table 2]**

| Racehorse A | Racehorse B | Racehorse C | Racehorse D |
|---|---|---|---|
| 3 | 3 | 3 | 3 |

Referring to the results shown in Figs. 1 and 2, it was found that the nutritional composition A had an effect of reducing an elevation of blood lactic acid value concentrations of racehorses. Moreover, referring to the results shown in Table 2, it was found that the nutritional composition A had an effect of improving the coat of racehorses.

## Claims

1. A racehorse nutritional composition comprising nicotinamide mononucleotide.

2. An animal nutritional composition for reducing an elevation of blood lactic acid concentrations, comprising nicotinamide mononucleotide.

3. An animal nutritional composition for coat improvement, comprising nicotinamide mononucleotide.

4. The animal nutritional composition according to claim 2 or 3, to be used for racehorses.
